# FASCICULE DE BREVET EUROPEEN

(11) **EP 2 072 396 B1**
(45) Date de publication et mention de la délivrance du brevet: **16.07.2014**
(21) Numéro de dépôt: 08171758.9
(22) Date de dépôt: 16.12.2008
(51) Int. Cl.: B64D 27/18, F02C 7/20, F02K 3/06, B64D 27/26, F01D 25/24, B64D 29/06, F01D 25/16

(54) **Carter intermediaire pour turboréacteur d'aéronef à conception ameliorée**
Zwischengehäuse für Flugzeugturbinentriebwerk in verbesserter Ausführung
Intermediate casing for an aircraft jet engine with improved design

(30) Priorité: 18.12.2007 FR 0759940
(43) Date de publication de la demande: 24.06.2009
(73) Titulaire: Snecma, 75015 Paris (FR)
(72) Inventeur: Duchatelle, Thierry, François, Maurice, 94000 Creteil (FR); Sanchez, Arnaud, 91800 Brunoy (FR)
(74) Mandataire: Ilgart, Jean-Christophe

(56) Documents cités:
- EP-A- 1 707 487
- US-A- 3 398 535
- US-A- 4 132 069

## Description

La présente invention se rapporte de façon générale à un ensemble propulsif pour aéronef, du type comprenant un turboréacteur, une nacelle enveloppant le turboréacteur, ainsi qu'un mât d'accrochage pourvu d'une structure rigide et de moyens d'accrochage du turboréacteur sur la structure rigide. Un tel ensemble est par exemple connu des documents US 3398535 et EP 1 707 487.

Plus précisément, l'invention se rapporte au carter intermédiaire du turboréacteur d'un tel ensemble.

Le mât d'accrochage, également appelé « EMS » (de l'anglais « Engine Mounting Structure »), ou encore « pylon » ou « engine pylon », permet de suspendre le turboréacteur au-dessous de la voilure de l'aéronef, ou bien de monter ce turboréacteur au-dessus de cette même voilure, ou bien encore de le rapporter en partie arrière du fuselage. Il est en effet prévu pour constituer l'interface de liaison entre un turboréacteur et une partie structurale donnée de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

La nacelle est quant à elle classiquement équipée de plusieurs capots enveloppant le turboréacteur et permettant un accès à ce dernier en position ouverte, ces capots étant connus sous les dénominations de capots de soufflante et de capots d'inverseur de poussée.

Le turboréacteur comporte un carter de soufflante prolongé vers l'arrière par un carter dit intermédiaire, comprenant une virole extérieure ainsi qu'un flasque transversal avant et un flasque transversal arrière parallèles et disposés radialement intérieurement par rapport à cette virole extérieure, ce carter intermédiaire comprenant en outre des bras structuraux répartis angulairement et s'étendant radialement entre les flasques avant et arrière, jusqu'à la virole extérieure.

De façon classique, le mât d'accrochage dispose d'une structure rigide, également dénommée structure primaire, pouvant prendre la forme d'un caisson longitudinal. Le mât comporte également des moyens d'accrochage du turboréacteur sur la structure rigide, ces moyens comprenant généralement plusieurs attaches moteur, ainsi qu'un dispositif de reprise des efforts de poussée, habituellement constitué par deux bielles de reprise.

Ces deux bielles sont agencées symétriquement par rapport à un plan médian vertical et longitudinal de l'ensemble propulsif, en étant chacune orientée de façon à s'écarter du plan précité en allant vers l'avant. Leur extrémité avant est fixée au flasque arrière du carter intermédiaire, par l'intermédiaire d'une ferrure de fixation rapportées sur ce même flasque.

Les efforts de poussée transitant par les bielles de reprise, ou efforts axiaux, sont donc directement introduits dans le carter intermédiaire, et plus précisément dans le flasque arrière de ce dernier. Etant donné l'intensité très élevée de ces efforts de poussée, les solutions de l'art antérieur prévoient une conception complexe du carter intermédiaire à proximité des moyens de réception des deux ferrures de fixation des bielles, ce qui est naturellement pénalisant en terme de masse globale, ainsi qu'en terme d'encombrement, alors que la zone concernée est déjà fortement encombrée, notamment par la présence et/ou le passage d'équipements dans l'espace inter-flasques.

L'invention a donc pour but de proposer un carter intermédiaire pour turboréacteur d'aéronef remédiant au moins partiellement aux problèmes mentionnés ci-dessus, relatifs aux réalisations de l'art antérieur.

Pour ce faire, l'invention a pour objet un carter intermédiaire pour turboréacteur d'aéronef, comprenant une virole extérieure ainsi qu'un flasque transversal avant et un flasque transversal arrière parallèles et disposés radialement intérieurement par rapport à ladite virole extérieure, ledit carter intermédiaire comprenant en outre des bras structuraux répartis angulairement et s'étendant radialement entre lesdits flasques avant et arrière, jusqu'à ladite virole extérieure, ledit flasque arrière étant équipé de premiers moyens de réception d'une première ferrure de fixation d'une première bielle de reprise des efforts de poussée du turboréacteur, lesdits premiers moyens de réception comprenant des bossages issus dudit flasque arrière, bossages à travers chacun desquels est réalisé au moins un orifice traversant destiné à être traversé par une vis de fixation de ladite première ferrure de fixation, lesdits orifices traversants étant espacés angulairement par rapport aux bras structuraux. Selon l'invention, au moins l'un desdits bossages s'étend jusqu'à contacter l'un desdits bras structuraux.

Par conséquent, avec l'agencement selon l'invention, les efforts de poussée issus de la première bielle de reprise transitent successivement dans la ferrure de fixation associée, dans les vis de fixation, puis dans les bossages correspondant globalement à une surépaisseur de flasque arrière, avant de rejoindre l'un ou plusieurs des bras structuraux raccordés à ces bossages, et offrant une rigidité satisfaisante dans la direction axiale. Ce chemin privilégié d'efforts constitué à l'aide du / des bossages reliés à un ou plusieurs des bras structuraux permet par conséquent d'offrir une solution efficace pour le transfert des efforts de poussée, sans pour autant générer de problème de masse ou d'encombrement, grâce à la simplicité de la conception adoptée.

De préférence, pour un meilleur transfert des efforts de poussée en direction des bras structuraux, chacun des bossages s'étend jusqu'à contacter l'un de ces bras structuraux.

A cet égard, il peut être prévu que certains des bossages s'étendent jusqu'à contacter un bras structural donné, et que les autres bossages s'étendent jusqu'à contacter le bras structural directement consécutif audit bras structural donné. Ce cas est en particulier adopté lorsque la ferrure de fixation dispose d'une étendue angulaire légèrement inférieure à l'étendue angulaire définie entre les deux bras structuraux directement consécutifs entre lesquels elle se trouve. Néanmoins, il pourrait être fait en sorte que la ferrure de fixation dispose d'une étendue angulaire supérieure à l'étendue angulaire définie entre deux bras structuraux directement consécutifs, sans sortir du cadre de l'invention.

De préférence, chaque bossage s'étend sur une épaisseur sensiblement constante, l'épaisseur étant ici à comprendre comme la distance dans la direction axiale, à partir de la surface du flasque de laquelle est issu le bossage concerné. Par ailleurs, on fait également de préférence en sorte que leur largeur soit également sensiblement constante, ces bossages s'étendant dans le sens de leur longueur, sensiblement orthogonalement à leur bras structural associé.

Préférentiellement, chaque bossage s'étend à partir d'une face avant dudit flasque arrière, c'est-à-dire dans un espace dit inter-flasques, à savoir en regard du flasque avant du carter intermédiaire.

A cet égard, il est noté qu'à chacun desdits orifices traversants est également associé un bossage additionnel s'étendant à partir d'une face arrière dudit flasque arrière, ce bossage additionnel pouvant prendre ici une forme classique sensiblement circulaire agencée autour de l'orifice de fixation qui le traverse, c'est-à-dire sans nécessairement être prolongé vers le bras structural voisin comme cela est le cas pour les bossages précités. Ainsi, l'orifice de fixation traverse successivement le bossage prolongé jusqu'au bras structural associé, le flasque arrière, puis le bossage additionnel.

Dans cette configuration, on prévoit de préférence que chaque bossage additionnel présente une surface de support de ladite première ferrure de fixation.

Toujours de manière préférentielle, lesdits premiers moyens de réception comprennent également un orifice destiné à loger un pion de cisaillement de ladite première ferrure de fixation, cet orifice étant de préférence situé entre les orifices de fixation précités. A titre indicatif, ce pion de cisaillement est prévu pour le passage des efforts de cisaillement dans le carter intermédiaire, l'introduction de ces efforts de cisaillement orientés dans le plan transversal du turboréacteur résultant de l'inclinaison précitée des bielles de reprise. Tout comme les vis de fixation, ce pion de cisaillement est de préférence orienté sensiblement axialement.

Dans un tel cas, il est par exemple prévu que le nombre desdits bossages soit de quatre, chacun équipé d'un unique trou traversant destiné à être traversé par une vis de fixation de ladite première ferrure de fixation, et que lesdits moyens de réception comprennent également une nervure de renfort en forme générale de croix à quatre branches s'étendant à partir dudit flasque arrière, dont le centre passe par ledit orifice destiné à loger ledit pion de cisaillement, et dont les quatre extrémités contactent lesdits quatre bossages, respectivement. Par conséquent, les efforts de cisaillement issus de la première bielle de reprise transitent successivement dans la ferrure de fixation associée, dans le pion de cisaillement, dans la nervure en croix puis dans les bossages, avant de rejoindre eux aussi l'un ou plusieurs des bras structuraux raccordés à ces bossages, et offrant une rigidité satisfaisante dans les directions transversale et verticale. Ce chemin privilégié d'efforts constitué à l'aide du / des bossages reliés à un ou plusieurs des bras structuraux, ainsi qu'à l'aide de la nervure en croix également dite nervure en X, permet par conséquent d'offrir une solution efficace pour le transfert des efforts de cisaillement, sans pour autant générer de problème de masse ou d'encombrement, grâce à la simplicité de la conception adoptée.

De manière préférentielle, ladite nervure de renfort s'étend à partir d'une face avant ainsi que d'une face arrière dudit flasque arrière, la rendant ainsi traversante par rapport à ce dernier. Néanmoins, celle-ci pourrait être prévue pour ne faire saillie que d'une seule des deux faces du flasque, de préférence de la face arrière, sans sortir du cadre de l'invention.

Par ailleurs, on fait en sorte que la seconde bielle de reprise des efforts de poussée soit associée à des moyens de réception de ferrure identiques ou similaires aux premiers moyens de réception décrits ci-dessus. Ainsi, de façon générale, ledit flasque arrière est en outre équipé de seconds moyens de réception d'une seconde ferrure de fixation d'une seconde bielle de reprise des efforts de poussée du turboréacteur, lesdits seconds moyens de réception comprenant des bossages issus dudit flasque arrière, bossages à travers chacun desquels est réalisé au moins un orifice traversant destiné à être traversé par une vis de fixation de ladite seconde ferrure de fixation, lesdits orifices traversants étant espacés angulairement par rapport aux bras structuraux, et au moins l'un desdits bossages s'étendant jusqu'à contacter l'un desdits bras structuraux.

De préférence, le carter intermédiaire est réalisé d'une seule pièce, en fonderie.

L'invention a également pour objet un turboréacteur pour aéronef, comprenant un carter intermédiaire tel que décrit ci-dessus, ladite virole extérieure étant agencée dans le prolongement arrière du carter de soufflante.

L'invention a également pour objet un ensemble propulsif pour aéronef comprenant un tel turboréacteur, ainsi qu'un mât d'accrochage dudit turboréacteur comprenant une structure rigide ainsi que des moyens d'accrochage dudit turboréacteur sur ladite structure rigide, ces moyens d'accrochage comportant lesdites première et seconde bielles de reprise des efforts de poussée.

D'autres avantages et caractéristiques de l'invention apparaîtront dans la description détaillée non limitative ci-dessous.

Cette description sera faite au regard des dessins annexés parmi lesquels ;
- la figure 1 représente un vue schématique de côté d'un ensemble propulsif pour aéronef conforme à la présente invention ;
- la figure 2 représente une vue partielle en perspective de l'ensemble montré sur la figure 1, représentant de façon plus détaillée le carter intermédiaire du turboréacteur ;
- la figure 3 représente une vue en coupe transversale passant entre les deux flasques du carter intermédiaire, et prise selon la ligne III-III de la figure 1 ;
- la figure 4 représente une vue en coupe transversale passant à l'arrière du flasque arrière du carter intermédiaire, et prise selon la ligne IV-IV de la figure 1 ;
- la figure 5 représente une vue en coupe prise selon la ligne V-V de la figure 4 ; et
- la figure 6 représente une vue en coupe prise selon la ligne VI-VI de la figure 4.

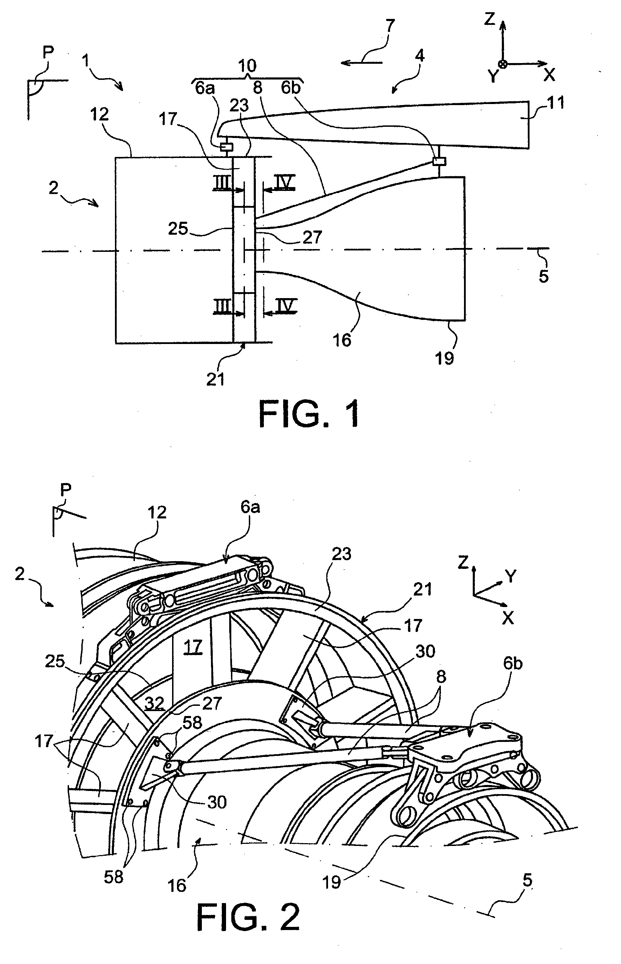

En référence à la figure 1, on voit un ensemble propulsif 1 pour aéronef selon un mode de réalisation préféré de la présente invention, cet ensemble 1 étant destiné à être fixé sous une aile d'aéronef (non représentée).

Globalement, l'ensemble propulsif 1, également appelé système propulsif intégré, est composé d'un turboréacteur 2, d'une nacelle (non représentée), et d'un mât d'accrochage 4 pourvu de moyens d'accrochage 10 du turboréacteur sur ce mât, ces moyens étant de préférence constitués d'une attache moteur avant 6a, d'une attache moteur arrière 6b, ainsi que d'un dispositif de reprise des efforts de poussée prenant la forme de deux bielles 8 (l'une étant masquée par l'autre sur la figure 1). A titre indicatif, il est noté que l'ensemble 1 comporte une autre série d'attaches (non représentées) permettant d'assurer la suspension de cet ensemble 1 sous la voilure de l'aéronef.

Dans toute la description qui va suivre, par convention, on appelle X la direction longitudinale de l'ensemble 1 qui est également assimilable à la direction longitudinale du turboréacteur 2, cette direction X étant parallèle à un axe longitudinal 5 de ce turboréacteur 2. D'autre part, on appelle Y la direction orientée transversalement par rapport à l'ensemble propulsif 1 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seules les attaches moteur 6a, 6b, les bielles de reprise de poussée 8 ainsi que la structure rigide 11 du mât d'accrochage 4 ont été représentées. Les autres éléments constitutifs non représentés de ce mât 4, tels que les moyens d'accrochage de la structure rigide 11 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, le turboréacteur 2 dispose d'une conception globalement classique, à savoir comportant à l'avant un carter de soufflante 12, prolongé vers l'arrière par un carter intermédiaire 21.

Le carter intermédiaire 21 comprend une virole extérieure 23 située dans le prolongement aérodynamique arrière du carter de soufflante, ainsi que des flasques transversaux 25, 27 disposés radialement intérieurement par rapport à cette virole extérieure 23, le carter intermédiaire 21 comprenant en outre des bras structuraux 17 répartis angulairement et s'étendant radialement entre les flasques 25, 27, jusqu'à la virole extérieure 23 qu'ils contactent.

Le turboréacteur comprend enfin un carter central 16, également dit carter « core », prolongeant le carter intermédiaire 21 vers l'arrière, à partir du flasque transversal arrière 27 sur lequel il est raccordé. Enfin, il est noté que le carter central s'étend jusqu'à une extrémité arrière 19 de plus grande dimension, également dénommée carter d'éjection.

L'attache moteur avant 6a est interposée entre l'extrémité avant de la structure rigide 11, également dite structure primaire, et le carter de soufflante 12 ou la virole extérieure 23 du carter intermédiaire 21.

L'attache arrière 6b est quant à elle interposée entre la structure rigide 11 et l'extrémité arrière 19 du carter central 16. Les deux attaches moteur avant 6a, 6b sont traversées par un plan médian P orienté verticalement et longitudinalement, et passant par l'axe 5.

Ce même plan P constitue un plan de symétrie pour les deux bielles 8 de reprise des efforts de poussée, de part et d'autre duquel elles se situent, respectivement. Comme cela est visible sur la figure 2, chaque bielle 8 présente une extrémité arrière articulée sur un corps de l'attache moteur arrière 6b, ainsi qu'une extrémité avant raccordée sur le flasque transversal 27, par l'intermédiaire d'une ferrure de fixation 30 montée sur ce flasque. Sur cette même figure, on peut apercevoir que le flasque transversal arrière 27 et le flasque transversal avant 25, prenant chacun le forme d'un disque ou anneau orienté transversalement, sont espacés l'un de l'autre selon la direction X, en formant entre eux un espace 32 dit inter-flasques dans lequel pénètre chacun des bras structuraux ou aubages directeurs de sortie 17.

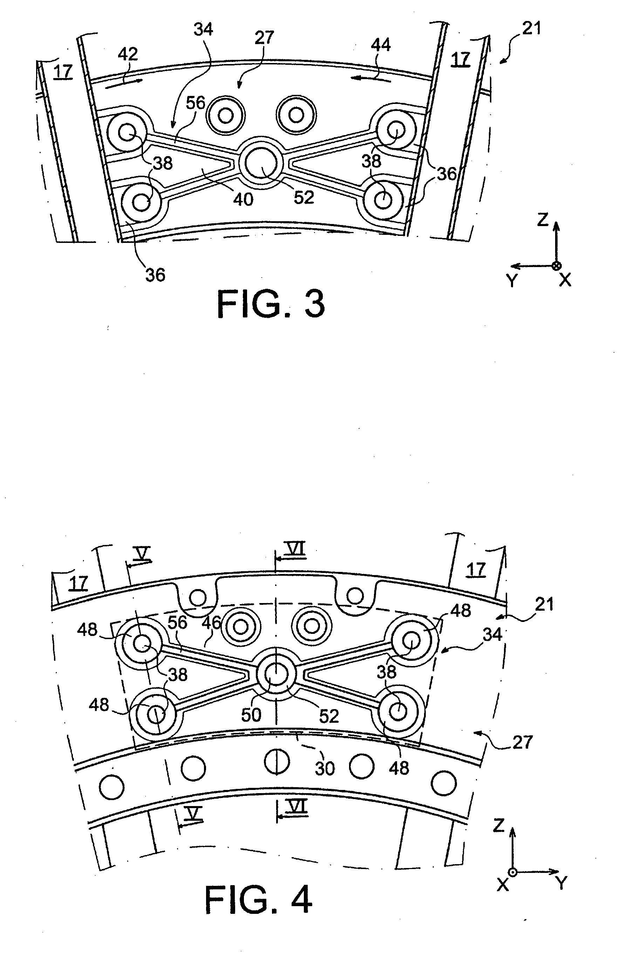

L'une des particularités de la présente invention réside dans la conception des moyens de réception des ferrures de fixation 30, qui vont être décrits pour l'une des deux bielles 8, à l'aide des figures 3 à 6. A cet égard, les moyens de réception de l'autre ferrure 30 associée à la seconde bielle de reprise sont de conception identique ou similaire, et ne seront de ce fait pas davantage décrits. De plus, il est noté que les seconds moyens de réception associés à la seconde ferrure et à la seconde bielle sont de préférence symétriques aux premiers moyens de réception associés à la première ferrure et à la première bielle, par rapport au plan P précité.

En référence tout d'abord à la figure 3, montrant notamment le flasque arrière 27 depuis l'avant, on peut voir les premiers moyens de réception 34 de la première ferrure de fixation portant de manière articulée l'extrémité avant de la première bielle, ces moyens 34 étant de préférence réalisés d'un seul tenant, par exemple en fonderie, avec le flasque 27 à partir duquel ils font saillie.

Les moyens 34 comprennent quatre bossages 36 s'étendant à partir d'une face avant 40 du flasque 27, ces bossages prenant la forme d'une surépaisseur dans ce dernier. Chacun des quatre bossages 36 est traversé par un orifice traversant 38 sensiblement axial, destiné au passage d'une vis de fixation de la ferrure. Comme visible sur la figure 3, les quatre orifices 38 sont espacés les uns des autres, définissant ainsi des sommets d'un quadrilatère tel qu'un carré, un rectangle, ou encore un parallélogramme. Dans le mode de réalisation préféré, deux premiers orifices 38 espacés radialement l'un de l'autre mais non espacés angulairement se trouvent pratiqués sur le flasque 27 à proximité d'un premier bras 17, tandis que deux seconds orifices 38 espacés radialement l'un de l'autre mais non espacés angulairement se trouvent pratiqués sur le flasque 27 à proximité d'un second bras 17, directement consécutif du premier. Plus précisément, les deux premiers orifices 38, ou orifices de gauche sur la figure 3, sont décalés angulairement par rapport au premier bras 17, à savoir décalés selon une première direction angulaire 42 également dite direction tangentielle ou direction circonférentielle, alors que les deux seconds orifices 38, ou orifices de droite sur la figure 3, sont décalés angulairement par rapport au second bras 17, à savoir décalés selon une seconde direction angulaire 44 opposée à la première.

Pour assurer le transfert des efforts de poussée ou efforts axiaux issus des bielles de reprise, les bossages 36 s'étendant autour des premiers orifices 38 sont prolongés dans la seconde direction angulaire 44 jusqu'à contacter le premier bras structural 17, à savoir qu'ils se fondent dans ce dernier. De la manière, les bossages 36 s'étendant autour des seconds orifices 38 sont prolongés dans la première direction angulaire 42 jusqu'à contacter le second bras structural 17, à savoir qu'ils se fondent eux aussi dans ce second bras.

Les bossages 38 s'étendent sensiblement sur une épaisseur constante, qui est de préférence la même pour chacun des bossages, ces derniers prenant alors chacun la forme d'une barrette de préférence sensiblement orthogonale à son bras 17 associé, et de longueur plus ou moins importante en fonction de son éloignement de ce même bras.

En référence à présent à la figure 4 montrant la face arrière 46 du flasque 27, on peut apercevoir que chacun des orifices traversants 38 traverse également un bossage additionnel 48 faisant saillie à partir de cette face arrière. Ces bossages additionnels 48, pouvant être considérés comme agencés dans le prolongement axial des bossages principaux 36, ne s'étendent pas nécessairement jusqu'aux bras 17 associés, mais adoptent au contraire chacun une forme classique sensiblement circulaire, agencée autour de l'orifice de fixation qui le traverse.

De plus, l'extrémité arrière des bossages additionnels 48 est préférentiellement plane, et orientée transversalement afin de constituer une surface de support destinée à recevoir la ferrure de fixation de bielle. A cet égard, les quatre extrémités concernées sont de préférence coplanaires.

A titre indicatif, sur la figure 4, il a été représenté schématiquement en pointillés la ferrure de fixation 30, montrant que celle-ci présente une étendue angulaire autour de l'axe moteur légèrement inférieure à l'étendue angulaire entre les premier et second bras 17.

En référence conjointement aux figures 3 et 4, il est noté que les premiers moyens de réception 34 comprennent également un orifice 50, de préférence borgne, pour le logement d'un pion de cisaillement de la ferrure de fixation de bielle. Cet orifice 50, de préférence sensiblement axial, se situe préférentiellement sur ou à proximité du centre du quadrilatère formé par les quatre orifices traversant 38. De plus, cet orifice 50 est pratiqué dans un bossage 52 faisant saillie de part et d'autre du flasque 27, la partie de ce bossage située sur la face avant 40 étant obturée, tandis que la partie située sur la face arrière 46 est ouverte pour le passage du pion de cisaillement. De la même manière que pour les bossages additionnels 48, l'extrémité du bossage 52 située sur la face arrière 46 est préférentiellement plane, et orientée transversalement afin de constituer une surface de support destinée à recevoir la ferrure de fixation de bielle.

Pour assurer le transfert des efforts de cisaillement également dits efforts transversaux introduits dans le carter intermédiaire en raison de l'inclinaison des bielles de reprise, les moyens de réception 34 comprennent une nervure de renfort 56 en forme générale de croix à quatre branches, s'étendant en saillie de part et d'autre du flasque arrière 27. Cette nervure 56, également dite nervure en X, présente un centre passant par l'orifice 50 en vue axiale, et donc passant par le bossage 52, et présente également quatre extrémités contactant respectivement les quatre bossages 36 du côté avant du flasque 27, ces extrémités se fondant effectivement dans les bossages 36. De la même manière, les quatre extrémités contactent également respectivement les quatre bossages additionnels 48 du côté arrière du flasque 27.

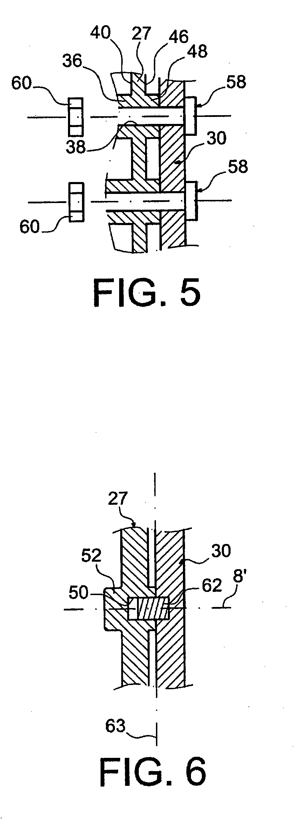

En référence à présent à la figure 5, on peut apercevoir qu'en configuration montée, la ferrure de fixation 30 est en appui contre les extrémités arrière des bossages additionnels 48. Son maintien est assuré par la présence des vis de fixation axiales 58 traversant chacune successivement un orifice traversant de la ferrure, le bossage additionnel 48, le flasque 27, et le bossage 36, chaque vis 58 coopérant avec un écrou 60 approprié, de préférence serré contre le bossage 36 correspondant.

En outre, la ferrure 30 porte fixement le pion de fixation axial 62, qui traverse partiellement le bossage 52 afin de se loger dans l'orifice borgne 50, comme le montre la figure 6. De plus, pour assurer une meilleure reprise des efforts transmis par les bielles 8, via les ferrures 30, l'orifice 50 du pion 62 est préférentiellement centré sur l'intersection de l'axe 8' de la bielle (non représentée) et du plan d'appui 63 entre le flasque arrière 27 et la ferrure 30.

Bien entendu, diverses modifications peuvent être apportées par l'homme du métier à l'ensemble propulsif 1 pour aéronef qui vient d'être décrit, uniquement à titre d'exemple non limitatif.

## Revendications

1. Carter intermédiaire (21) pour turboréacteur d'aéronef, comprenant une virole extérieure (23) ainsi qu'un flasque transversal avant (25) et un flasque transversal arrière (27) parallèles et disposés radialement intérieurement par rapport à ladite virole extérieure, ledit carter intermédiaire comprenant en outre des bras structuraux (17) répartis angulairement et s'étendant radialement entre lesdits flasques avant et arrière (25, 27), jusqu'à ladite virole extérieure (23), ledit flasque arrière étant équipé de premiers moyens de réception (34) d'une première ferrure de fixation (30) d'une première bielle de reprise des efforts de poussée (8) du turboréacteur, lesdits premiers moyens de réception comprenant des bossages (36) issus dudit flasque arrière (27), bossages à travers chacun desquels est réalisé au moins un orifice traversant (38) destiné à être traversé par une vis de fixation de ladite première ferrure de fixation, lesdits orifices traversants (38) étant espacés angulairement par rapport aux bras structuraux (17),
**caractérisé en ce qu'**au moins l'un desdits bossages (36) s'étend jusqu'à contacter l'un desdits bras structuraux (17) et **en ce que** ledit bossage (36) s'étend à partir d'une face avant (40) dudit flasque arrière (27).

2. Carter intermédiaire selon la revendication 1, **caractérisé en ce que** chacun des bossages (36) s'étend jusqu'à contacter l'un desdits bras structuraux (17).

3. Carter intermédiaire selon la revendication 2, **caractérisé en ce que** certains des bossages (36) s'étendent jusqu'à contacter un bras structural donné (17), et **en ce que** les autres bossages (36) s'étendent jusqu'à contacter le bras structural (17) directement consécutif audit bras structural donné.

4. Carter intermédiaire selon l'une quelconque des revendications précédentes, **caractérisé en ce que** chaque bossage (36) s'étend sur une épaisseur sensiblement constante.

5. Carter intermédiaire selon l'une quelconque des revendications précédentes, **caractérisé en ce qu'**à chacun desdits orifices traversants (38) est également associé un bossage additionnel (48) s'étendant à partir d'une face arrière (46) dudit flasque arrière (27).

6. Carter intermédiaire selon la revendication 5, **caractérisé en ce que** chaque bossage additionnel (48) présente une surface de support de ladite première ferrure de fixation.

7. Carter intermédiaire selon l'une quelconque des revendications précédentes, **caractérisé en ce que** lesdits premiers moyens de réception (34) comprennent également un orifice (50) destiné à loger un pion de cisaillement (62) de ladite première ferrure de fixation.

8. Carter intermédiaire selon la revendication 7, **caractérisé en ce que** ledit orifice (50) logeant le pion (62) est centré sur une intersection entre l'axe (8') de la bielle (8) et un plan d'appui (63) entre le flasque arrière (27) et la ferrure (30).

9. Carter intermédiaire selon la revendication 7 ou la revendication 8, **caractérisé en ce que** le nombre desdits bossages (36) est de quatre, chacun équipé d'un unique trou traversant (38) destiné à être traversé par une vis de fixation de ladite première ferrure de fixation, et **en ce que** lesdits moyens de réception (34) comprennent également une nervure de renfort (56) en forme générale de croix à quatre branches s'étendant à partir dudit flasque arrière (27), dont le centre passe par ledit orifice (50) destiné à loger ledit pion de cisaillement, et dont les quatre extrémités contactent lesdits quatre bossages (36), respectivement.

10. Carter intermédiaire selon la revendication 9, **caractérisé en ce que** ladite nervure de renfort (56) s'étend à partir d'une face avant (40) ainsi que d'une face arrière (46) dudit flasque arrière (27).

11. Carter intermédiaire selon l'une quelconque des revendications précédentes, **caractérisé en ce que** ledit flasque arrière (27) est en outre équipé de seconds moyens de réception (34) d'une seconde ferrure de fixation d'une seconde bielle de reprise des efforts de poussée du turboréacteur, lesdits seconds moyens de réception comprenant des bossages (36) issus dudit flasque arrière (27), bossages à travers chacun desquels est réalisé au moins un orifice traversant (38) destiné à être traversé par une vis de fixation de ladite seconde ferrure de fixation, lesdits orifices traversants (38) étant espacés angulairement par rapport aux bras structuraux (17), et **en ce qu'**au moins l'un desdits bossages (36) s'étend jusqu'à contacter l'un desdits bras structuraux (17).

12. Carter intermédiaire selon l'une quelconque des revendications précédentes, **caractérisé en ce qu'**il est réalisé d'une seule pièce.

13. Turboréacteur (2) pour aéronef, comprenant un carter intermédiaire (21) selon l'une quelconque des revendications précédentes, ladite virole extérieure (23) étant agencée dans le prolongement arrière du carter de soufflante (12).

14. Ensemble propulsif (1) pour aéronef comprenant un turboréacteur selon la revendication 13, ainsi qu'un mât d'accrochage (4) dudit turboréacteur comprenant une structure rigide (11) ainsi que des moyens d'accrochage dudit turboréacteur sur ladite structure rigide, ces moyens d'accrochage comportant lesdites première et seconde bielles de reprise des efforts de poussée (8, 8).

## Patentansprüche

1. Zwischengehäuse (21) für ein Flugzeugturbinentriebwerk, umfassend einen Außenring (23) sowie einen vorderen Querflansch (25) und einen hinteren Querflansch (27), die parallel sind und bezogen auf den Außenring radial innen angeordnet sind, wobei das Zwischengehäuse ferner Strukturarme (17) umfasst, die winkelmäßig verteilt sind und die sich zwischen dem vorderen und dem hinteren Flansch (25, 27) bis zu dem Außenring (23) radial erstrecken, wobei der hintere Flansch mit ersten Mitteln zur Aufnahme (34) eines ersten Befestigungsbeschlags (30) einer ersten Stange zur Aufnahme der Schubkräfte (8) des Turbinentriebwerks ausgestattet ist, wobei die ersten Aufnahmemittel aus dem hinteren Flansch (27) kommende Buckel (36) umfassen, Buckel, durch die hindurch jeweils wenigstens eine durchgehende Öffnung (38) ausgebildet ist, welche dazu bestimmt ist, von einer Befestigungsschraube des ersten Befestigungsbeschlags durchgriffen zu werden, wobei die durchgehenden Öffnungen (38) zu den Strukturarmen (17) winkelmäßig beabstandet sind,
**dadurch gekennzeichnet, dass** wenigstens einer der Buckel (36) sich so weit erstreckt, bis er mit einem der Strukturarme (17) in Kontakt gelangt und dass der Buckel (36) sich von einer Vorderseite (40) des hinteren Flansches (27) aus erstreckt.

2. Zwischengehäuse nach Anspruch 1, **dadurch gekennzeichnet, dass** ein jeder der Buckel (36) sich so weit erstreckt, bis er mit einem der Strukturarme (17) in Kontakt gelangt.

3. Zwischengehäuse nach Anspruch 2, **dadurch gekennzeichnet, dass** einige der Buckel (36) sich so weit erstrecken, bis sie mit einem gegebenen Strukturarm (17) in Kontakt gelangen, und dass die anderen Buckel (36) sich so weit erstrecken, bis sie mit dem direkt auf den gegebenen Strukturarm folgenden Strukturarm (17) in Kontakt gelangen.

4. Zwischengehäuse nach einem der vorhergehenden Ansprüche, **dadurch gekennzeichnet, dass** jeder Buckel (36) sich über eine im Wesentlichen konstante Dicke erstreckt.

5. Zwischengehäuse nach einem der vorhergehenden Ansprüche, **dadurch gekennzeichnet, dass** eine jede der durchgehenden Öffnungen (38) auch einem zusätzlichen Buckel (48), der sich von einer Rückseite (46) des hinteren Flansches (27) aus erstreckt, zugeordnet ist.

6. Zwischengehäuse nach Anspruch 5, **dadurch gekennzeichnet, dass** jeder zusätzliche Buckel (48) eine Fläche zum Tragen des ersten Befestigungsbeschlags aufweist.

7. Zwischengehäuse nach einem der vorhergehenden Ansprüche, **dadurch gekennzeichnet, dass** die ersten Aufnahmemittel (34) auch eine Öffnung (50) umfassen, welche dazu bestimmt ist, einen Scherstift (62) des ersten Befestigungsbeschlags zu lagern.

8. Zwischengehäuse nach Anspruch 7, **dadurch gekennzeichnet, dass** die den Stift (62) lagernde Öffnung (50) um einen Schnittpunkt zwischen der Achse (8') der Stange (8) und einer Anlageebene (63) zwischen dem hinteren Flansch (27) und dem Beschlag (30) zentriert ist.

9. Zwischengehäuse nach Anspruch 7 oder Anspruch 8, **dadurch gekennzeichnet, dass** die Anzahl der Buckel (36) vier beträgt, wobei ein jeder mit einem einzigen Durchgangsloch (38) versehen ist, das dazu bestimmt ist, von einer Befestigungsschraube des ersten Befestigungsbeschlags durchgriffen zu werden, und dass die Aufnahmemittel (34) auch eine insgesamt kreuzförmige Verstärkungsrippe (56) mit vier Schenkeln, die sich von dem hinteren Flansch (27) aus erstrecken, umfassen, deren Mittelpunkt durch die Öffnung (50), welche dazu bestimmt ist, den Scherstift zu lagern, verläuft und deren vier Enden jeweils mit den vier Buckeln (36) in Kontakt gelangen.

10. Zwischengehäuse nach Anspruch 9, **dadurch gekennzeichnet, dass** die Verstärkungsrippe (56) sich von einer Vorderseite (40) sowie von einer Rückseite (46) des hinteren Flansches (27) aus erstreckt.

11. Zwischengehäuse nach einem der vorhergehenden Ansprüche, **dadurch gekennzeichnet, dass** der hintere Flansch (27) ferner mit zweiten Mitteln zur Aufnahme (34) eines zweiten Befestigungsbeschlags einer zweiten Stange zur Aufnahme der Schubkräfte des Turbinentriebwerks ausgestattet ist, wobei die zweiten Aufnahmemittel aus dem hinteren Flansch (27) kommende Buckel (36) umfassen, Buckel, durch die hindurch jeweils wenigstens eine durchgehende Öffnung (38) ausgebildet ist, welche dazu bestimmt ist, von einer Befestigungsschraube des zweiten Befestigungsbeschlags durchgriffen zu werden, wobei die durchgehenden Öffnungen (38) zu den Strukturarmen (17) winkelmäßig beabstandet sind, und dass wenigstens einer der Buckel (36) sich so weit erstreckt, bis er mit einem der Strukturarme (17) in Kontakt gelangt.

12. Zwischengehäuse nach einem der vorhergehenden Ansprüche, **dadurch gekennzeichnet, dass** es einstückig ausgebildet ist.

13. Turbinentriebwerk (2) für ein Flugzeug, umfassend ein Zwischengehäuse (21) nach einem der vorhergehenden Ansprüche, wobei der Außenring (23) in der hinteren Verlängerung des Gebläsegehäuses (12) angeordnet ist.

14. Antriebseinheit (1) für ein Flugzeug, umfassend ein Turbinentriebwerk nach Anspruch 13 sowie einen Stiel zum Ankoppeln (4) des Turbinentriebwerks, der eine starre Struktur (11) sowie Mittel zum Ankoppeln des Turbinentriebwerks an die starre Struktur umfasst, wobei diese Ankopplungsmittel die erste und die zweite Stange zur Aufnahme der Schubkräfte (8, 8) umfassen.

## Claims

1. Intermediate casing (21) for an aircraft jet engine, comprising an outer shell (23) and also a front transverse flange (25) and a rear transverse flange (27) which are arranged parallel to one another and radially inside with respect to said outer shell, said intermediate casing also comprising structural arms (17) which are distributed angularly and extend radially between said front and rear flanges (25, 27) as far as said outer shell (23), said rear flange being equipped with first receiving means (34) for receiving a first fixing bracket (30) for fixing a first rod (8) for absorbing the thrust forces of the jet engine, said first receiving means comprising bosses (36) coming from said rear flange (27), through each of which bosses at least one through-orifice (38) is formed which is designed to be passed through by a fixing screw of said first fixing bracket, said through-orifices (38) being spaced apart angularly with respect to the structural arms (17),
**characterised in that** at least one of said bosses (36) extends as far as making contact with one of said structural arms (17) and **in that** each boss (36) extends from a front face (40) of said rear flange (27)

2. Intermediate casing according to claim 1, **characterised in that** each of the bosses (36) extends as far as making contact with one of said structural arms (17).

3. Intermediate casing according to claim 2, **characterised in that** some of the bosses (36) extend as far as making contact with a given structural arm (17), and **in that** the other bosses (36) extend as far as making contact with the structural arm (17) directly adjacent to said given structural arm.

4. Intermediate casing according to any one of the preceding claims, **characterised in that** each boss (36) extends over a substantially constant thickness.

5. Intermediate casing according to any one of the preceding claims, **characterised in that** an additional boss (48) which extends from a rear face (46) of said rear flange (27) is also associated with each of said through-orifices (38).

6. Intermediate casing according to claim 5, **characterised in that** each additional boss (48) has a support surface for supporting said first fixing bracket.

7. Intermediate casing according to any one of the preceding claims, **characterised in that** said first receiving means (34) also comprise an orifice (50) which is designed to house a shear pin (62) of said first fixing bracket.

8. Intermediate casing according to claim 7, **characterised in that** said orifice (50) housing the pin (62) is centred on an intersection between the axis (8') of the rod (8) and a bearing plane (63) between the rear flange (27) and the bracket (30).

9. Intermediate casing according to claim 7 or claim 8, **characterised in that** the number of said bosses (36) is four, each equipped with a single through-orifice (38) which is designed to be passed through by a fixing screw of said first fixing bracket, and **in that** said receiving means (34) also comprise a reinforcing rib (56) which is generally cross-shaped and comprises four branches extending from said rear flange (27), the centre of which cross passes through said orifice (50) which is designed to house said shear pin, and the four ends of which cross make contact with said four bosses (36), respectively.

10. Intermediate casing according to claim 9, **characterised in that** said reinforcing rib (56) extends from a front face (40) and also from a rear face (46) of said rear flange (27).

11. Intermediate casing according to any one of the preceding claims, **characterised in that** said rear flange (27) is also equipped with second receiving means (34) for receiving a second fixing bracket for fixing a second rod for absorbing the thrust forces of the jet engine, said second receiving means comprising bosses (36) coming from said rear flange (27), through each of which bosses at least one through-orifice (38) is formed which is designed to be passed through by a fixing screw of said second fixing bracket, said through-orifices (38) being spaced apart angularly with respect to the structural arms (17), and **in that** at least one of said bosses (36) extends as far as making contact with one of said structural arms (17).

12. Intermediate casing according to any one of the preceding claims, **characterised in that** it is made in a single piece.

13. Jet engine (2) for an aircraft, comprising an intermediate casing (21) according to any one of the preceding claims, said outer shell (23) being arranged in the rear extension of the fan casing (12).

14. Propulsive assembly (1) for an aircraft comprising a jet engine according to claim 13 and also a pylon (4) of said jet engine comprising a rigid structure (11) and also means for attaching said jet engine to said rigid structure, these attachment means comprising said first and second rods (8, 8) for absorbing the thrust forces.
